# EUROPÄISCHE PATENTANMELDUNG

(11) **EP 1 614 338 A1**
(43) Veröffentlichungstag der Anmeldung: **11.01.2006**
(21) Anmeldenummer: 05090151.1
(22) Anmeldetag: 24.05.2005
(51) Int. Cl.: A01D 34/86

(54) **Trägerfahrzeug mit Mähgerät**

(30) Priorität: 05.07.2004 DE 102004032573
(71) Anmelder: GÖDDE Maschinenbau GmbH, 49808 Lingen (DE)
(72) Erfinder: Gödde, Bernhard, 49808 Lingen (DE); Gödde, Hermann-Josef, 49808 Lingen (DE)
(74) Vertreter: Lüke, Dierck-Wilm

(57) **Zusammenfassung**

Die Erfindung betrifft ein Trägerfahrzeug (1) mit einem angebauten Mähgerät (2), das am freien Ende eines Auslegers (3) angeordnet ist, der auf einer fahrzeugfesten Konsole (4) an einem Fahrzeugdrehlager (5) um eine erste vertikale Achse (16) drehbar gelagert ist. Sie ist dadurch gekennzeichnet, dass der Ausleger (3) ein Auslegerdrehlager (6) aufweist, an welchem das Mähgerät (2) um eine zweite vertikale Achse (17) drehbar gelagert ist und dass Mittel zur Steuerung einer Drehung im Fahrzeugdrehlager (5) und einer Drehung im Auslegerdrehlager (6) eingerichtet sind, wobei das Fahrzeugdrehlager (5) und das Auslegerdrehlager (6) durch die Mittel zur Steuerung zu Drehungen in gleichen Winkelbeträgen, jedoch gegensätzlichen Drehrichtungen ansteuerbar sind.

## Beschreibung

### Gebiet der Erfindung

Die Erfindung bezieht sich auf ein Trägerfahrzeug mit einem angebauten Mähgerät, das am freien Ende eines Auslegers angeordnet ist, der auf einer fahrzeugfesten Konsole an einem Fahrzeugdrehlager um eine erste vertikale Achse drehbar gelagert ist. Der Begriff der vertikalen Drehachse umfasst hier und auch in anderen Zusammenhängen Winkel um bis zu 20 ° aus der Vertikalen, vorzugsweise jedoch von weniger als 5° aus der Vertikalen.

### Stand der Technik und Hintergrund der Erfindung

Aus der Praxis sind sogenannte Zwischenachsmähgeräte bekannt. Hierbei ist das Mähgerät auf einem Ausleger um eine vertikale Achse drehbar an einem Fahrzeugdrehkranz befestigt. Der Fahrzeugdrehkranz befindet sich zwischen zwei Radachsen des Fahrzeuges. Aufgrund der Geometrie der Zusammenhänge ergibt sich als Nachteil, dass das Mähgerät nicht vollständig aus dem Arbeitsbereich in die Fahrzeugspur verschwenkt werden kann. Dies ist insbesondere beim Umfahren von Hindernissen nachteilig. Um solche Hindernisse muss folglich ein störend großer Bogen gefahren werden.

Aus der Praxis sind des Weiteren sogenannte Frontgeräte bekannt. Hierbei ist das Mähgerät vorderseitig des Trägerfahrzeuges angebracht. Nachteilig hierbei ist eine vergleichsweise schlechte Sicht auf das Mähgerät durch eine das Trägerfahrzeug steuernde Bedienperson.

### Technisches Problem der Erfindung

Der Erfindung liegt daher das technische Problem zugrunde, ein Trägerfahrzeug mit einem angebauten Mähgerät zu schaffen, wobei einerseits eine Bedienungsperson des Trägerfahrzeuges gute Sicht auf das Mähgerät hat und andererseits Hindernisse problemlos eng umfahren werden können.

### Grundzüge der Erfindung und Ausführungsformen

Zur Lösung dieses technischen Problems lehrt die Erfindung, dass der Ausleger ein Auslegerdrehlager aufweist, an dem das Mähgerät um eine zweite vertikale Achse drehbar gelagert ist, und dass Mittel zur Steuerung einer Drehung im Fahrzeugdrehlager und einer Drehung im Auslegerdrehlager eingerichtet sind, wobei das Fahrzeugdrehlager und das Auslegerdrehlager durch die Mittel zur Steuerung zu Drehungen in gleichen Winkelbeträgen, jedoch gegensätzlichen Drehrichtungen ansteuerbar sind.

Mit der Erfindung wird erreicht, dass ein typischerweise sich quer zur Fahrtrichtung des Trägerfahrzeuges erstrekkendes Mähgerät praktisch winkelkonstant, bezogen auf die Geradeausfahrtrichtung des Trägerfahrzeuges, betreiben lässt, und zwar ungeachtet des eingestellten Drehwinkels im Fahrzeugdrehlager. Hierdurch ist es letztendlich auch möglich, zum Zwecke des Umfahrens von Hindernissen das Mähgerät in geeignete Ruhestellungen innerhalb der Spur des Trägerfahrzeuges einzuschwenken. Hierbei wird es zweckmäßig sein, dass das Fahrzeugdrehlager an einem Ende des Trägerfahrzeuges, insbesondere am Heck des Trägerfahrzeuges, beispielsweise in Fahrtrichtung an der rechten Seite des Heckes bei Ländern mit Rechtsverkehr oder an der linken Seite des Heckes bei Ländern mit Linksverkehr, angeordnet ist. Dann ist das Mähgerät besonders einfach zwischen zwei Radachsen bzw. die Vorder- und Hinterräder des Trägerfahrzeuges eindrehbar. Somit wird ein bei einem Trägerfahrzeug, insbesondere einem Traktor, typischerweise vorhandener Hohlraum bzw. eine Lücke gleichsam als Ruheposition für das Mähgerät genutzt, und zwar ohne dass Teile des Trägerfahrzeuges und/ oder des Mähgerätes in störender Weise um Fahrzeugumrisse, bezogen auf eine horizontale Querschnittsebene, hervorstehen. Dies hängt im Falle eines Traktors auch damit zusammen, dass sich die Außenkontur zwischen den Radachsen verjüngt. Im Ergebnis können insbesondere Hindernisse sehr eng umfahren werden, wenn das Mähgerät hierzu in die Ruheposition gebracht wird.

Die Steuerung des Fahrzeugdrehlagers und des Auslegerdrehlagers in erfindungsgemäßer Weise kann unterschiedlich erfolgen. Zum Ersten ist eine rein mechanische Steuerung möglich. Hierzu kann ein Steuerarm vorgesehen sein, welcher beidseitig um vertikale Steuerachsen schwenkbar gelagert ist. Eine Steuerachse ist außerhalb der ersten vertikalen Achse des Auslegers am Trägerfahrzeug fest befestigt. Die andere Steuerachse ist am Auslegerdrehlager außerhalb der zweiten vertikalen Achse ortsfest befestigt. In der Regel wird es sich empfehlen, den Steuerarm flexibel, i.e. als Bowdenzug oder dergleichen auszubilden. Alternativ hierzu kann der Steuerarm teilweise ersetzt werden durch eine Hydraulikleitung. Dabei bilden die beiden verbliebenen Enden des Steuerarms Teile von komplementären Zylinder-/Kolbeneinrichtungen, welche mit Hydraulik- öl gefüllt sind. Die beiden Zylinder-/Kolbeneinrichtungen sind über die Hydraulikleitung miteinander druckdicht verbunden. Das hydraulische Verhältnis ist dabei den Hebelverhältnissen der beiden Enden des Steuerarmes (Abstand der Steuerachsen zu den zugeordneten Achsen der Drehlager) mit der Maßgabe anzupassen, dass die Winkelbeträge in den Drehlagern jeweils gleich sind. Schließlich ist es möglich, im Rahmen des Fahrzeugdrehlagers und des Auslegerdrehlagers elektrisch ansteuerbare Stellglieder, beispielsweise einen Schrittschaltmotor, ggf. mit Reduktionsgetriebe, zur Ansteuerung der jeweiligen Drehbewegungen vorzusehen. Dann erfolgt die Steuerung der Stellglieder durch eine geeignete elektronische Schaltung.

Im Rahmen der Erfindung ist der Ausleger grundsätzlich beliebig ausführbar. Bevorzugt ist es, wenn der Ausleger dreiteilig mit einem fahrzeugseitigen ersten Arm, einem hieran angeschlossenen zweiten Arm und einem mähgeräteseitigen dritten Arm ausgebildet ist. Die Arme können jeweils gegeneinander um horizontale Schwenkachsen verschwenkbar sein. Hierzu können in fachüblicher Weise Zylinder-/Kolbeneinrichtungen vorgesehen sein, mittels welchen Schwenkwinkel angesteuert werden können. Vorzugsweise wird hierbei der dritte Arm in vertikaler Position gehalten. Weiterhin bevorzugt ist es, wenn einer oder mehrere der Arme, insbesondere der zweite Arm, in Richtungen seiner Längserstreckung aus- und einfahrbar ist. Der zweite Arm wird typischerweise im Wesentlichen in vertikaler Ausrichtung betrieben sein, so dass durch das Aus- und Einfahren desselben ein insgesamt großer Arbeitsradius erhalten wird. Zwischen dem Mähgerät und dem Ausleger kann eine horizontale Schwenkachse vorgesehen sein, welche eine seitliche Verschwenkung des Mähgerätes erlaubt.

Es ist auch möglich, dass der erste Arm und der zweite Arm eine winkelstarre bauliche Einheit bilden. Diese bauliche Einheit kann aus gegeneinander verwinkelt angeordneten geradlinig verlaufenden Bauteilen, aber auch insgesamt mit bogenverlaufsartiger Form ausgebildet sein.

Im Folgenden wird die Erfindung anhand eines in den Figuren dargestellten Ausführungsbeispieles eines Trägerfahrzeuges mit Mähgerät näher erläutert. Es zeigt:
- Figur 1:: eine Draufsicht auf das Trägerfahrzeug mit eingeschwenktem Ausleger mit Mähgerät und mit zwei gestrichelt dargestellten ausgeschwenkten Stellungen des Auslegers mit Mähgerät,
- Figur 2:: eine Seitenansicht des Trägerfahrzeuges nach Figur 1 mit eingeschwenktem Ausleger und Mähgerät und
- Figur 3:: eine Heckansicht des Trägerfahrzeuges nach Figur 1 teilweise im Schnitt nach der Linie III - III in Figur 2 und mit gestrichelt dargestelltem, ausgeschwenktem Ausleger mit Mähgerät.

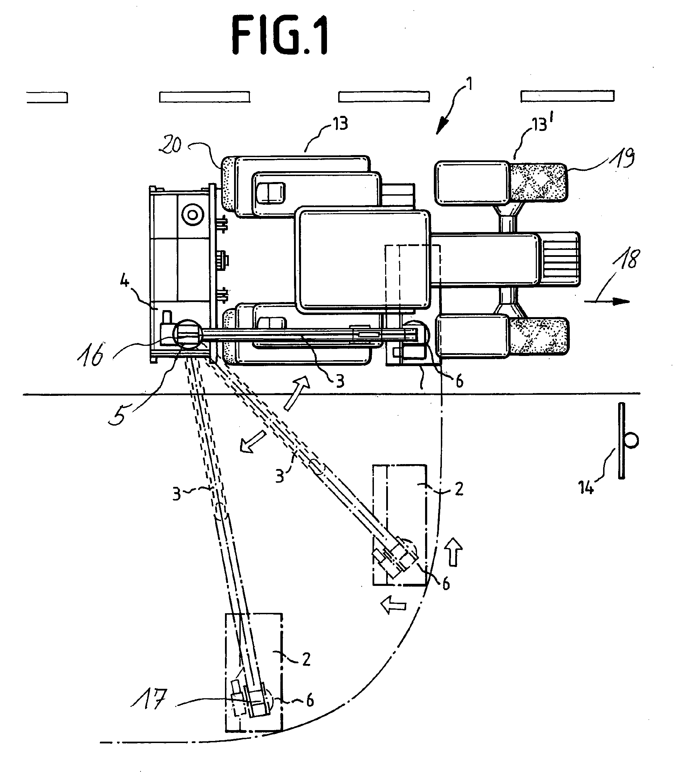

Die Figur 1 zeigt ein Trägerfahrzeug in Form eines Traktors 1 mit angebautem Ausleger 3, an dessen freien Ende ein Mähgerät 2 angebaut ist. Der Ausleger 3 ist auf einer fahrzeugfesten Konsole 4 an einem Fahrzeugdrehlager 5, z.B. einem Drehkranz, um eine erste vertikale Achse 16 drehbar gelagert. Ferner ist am freien Ende des Auslegers 3 ein Auslegerdrehlager 6 eingerichtet, an dem das Mähgerät 2 um eine zweite vertikale Achse 17 drehbar gelagert ist. Eine vergleichende Betrachtung der drei verschiedenen Betriebsstellungen des Auslegers 3 in Figur 1 zeigt, dass nicht näher dargestellte Mittel zur Steuerung einer Drehung des Auslegers 3 im Fahrzeugdrehlager 5 und einer Drehung des Mähgerätes 2 im Auslegerdrehlager 6 eingerichtet sind, wobei das Fahrzeugdrehlager 5 und das Auslegerdrehlager 6 zu Drehungen in gleichen Winkelbeträgen, jedoch gegensätzlichen Drehrichtungen ansteuerbar sind. Im Ergebnis verläuft das Mähgerät 2 unabhängig von der Betriebsstellung des Auslegers 3 stets quer zur Fahrtrichtung 18 des Trägerfahrzeuges 1.

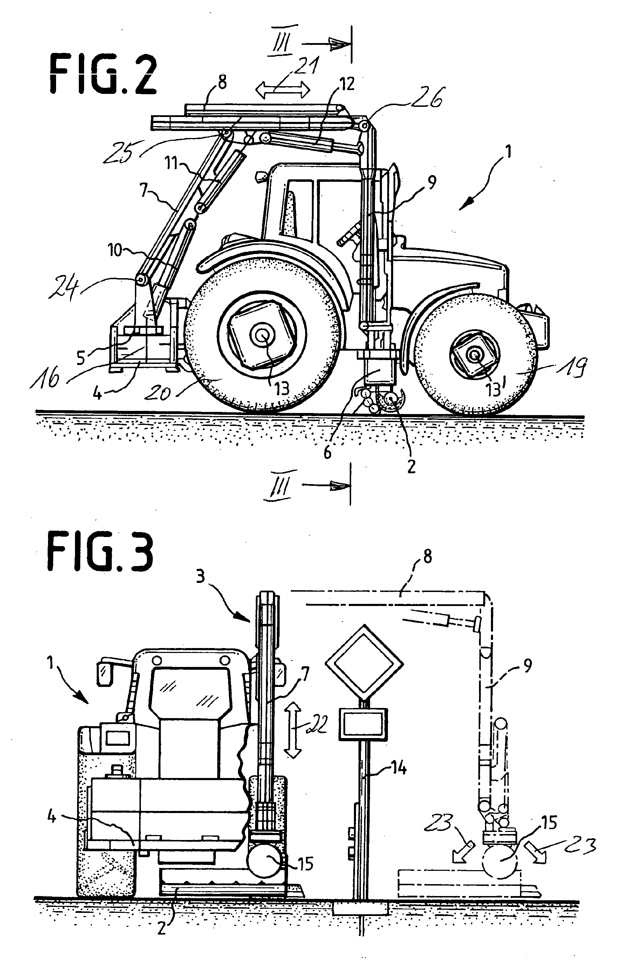

Das Fahrzeugdrehlager 5 ist am Heck des Trägerfahrzeuges 1 angeordnet und zwar rechtsseitig (bezogen auf die Fahrtrichtung 18). Der Ausleger 3 ist dreiteilig mit einem fahrzeugseitigen ersten Arm 7, einem hieran angeschlossenen zweiten Arm 8 und einem arbeitsgerätseitigen dritten Arm 9 ausgebildet ist. Der zweite Arm 8 und der dritte Arm 9 sind teleskopartig in Richtung ihrer Längserstreckung aus- und einfahrbar, was in der Aufsicht nach Figur 1 und in den Figuren 2 und 3 an Hand der Pfeile 21 bzw. 22 erkennbar ist. Der erste Arm 7 ist gegenüber dem Trägerfahrzeug 1 mittels einer Zylinder-/Kolbeneinrichtung 10 verschwenkbar. Der zweite Arm 8 ist gegenüber dem ersten Arm 7 ebenfalls in entsprechender Weise mittels einer Zylinder-/Kolbeneinrichtung 11 verschwenkbar. Analoges gilt für eine Verschwenkung mittels einer Zylinder-/Kolbeneinrichtung 12 zwischen dem zweiten Arm 8 und dem dritten Arm 9 .

Die Figur 3 zeigt, dass der Traktor 1 mit zwischen seine beiden Radachsen 13, 13' bzw. die kleinen Vorder- und grossen Hinterräder 19 bzw 20 eingedrehtem Mähgerät 2 keine beim Umfahren von Hindernissen 14 störenden Bauteile aufwsist. Der Ausleger 3 und das Mähgerät 2 sind dabei in die Außenkontur des Traktors 1 eingefügt. Entsprechendes ist auch in den korrespondierenden Arbeitsstellungen gemäß der Figur 1 erkennbar. Die Figur 3 zeigt ferner, dass bei im Wesentlichen vertikaler Orientierung des ersten Armes 7 und insbesondere des dritten Armes 9 auch Hindernisse 14 gleichsam überfasst werden können. Schließlich ist der Figur 3 entnehmbar, dass das Mähgerät 2 mittels eines Schwenklages 15 seitlich verschwenkt werden kann, wie es die Pfeile 23 zeigen.

Die in den Figuren nicht näher dargestellten Mittel zur Steuerung einer Drehung des Auslegers 3 im Fahrzeugdrehlager 5 und einer Drehung des Mähgerätes 2 im Auslegerdrehlager 6 bewirken, dass der Ausleger 3 und das Mähgerät 2 automatisch und synchron derart zusammenwirken, dass beim vom Fahrer des Traktors 1 bewirkten Ausschwenken des Auslegers 3 automatisch auch das Mähgerät 2 in entgegengesetzter Dehrichtung verschwenkt wird, so dass das Mähgerät 2 immer senkrecht zur Fahrzeuglängsachse bzw. zur Fahrtrichtung 18 steht, ohne dass der Fahrer das Mähgerät 2 besonders steuern muss. Die Automatisierung ist derart getroffen, dass der Fahrer des Traktors 1 nur den Ausleger 3 betätigen bzw. verschwenken muss, wohingegen das Mähgerät 2 automatisch mitgeregelt wird. Es erfolgt also ein synchrones Zusammenwirken des Verschwenkens von Ausleger 3 und Mähgerät 2 über die genannten Mittel, wobei der Fahrer nur den Ausleger 3 ausschwenken muss, wohingegen das Mähgerät 2 selbsttätig bzw. automatisch mitgeregelt wird. Dabei ist das Mähgerät 2 im Schwenklager 1 auch um eine horizontale Achse schwenkbar, um an die Neigung von Böschungen angepasst werden zu können.

### Bezugszeichenliste

- 01: Traktor
- 02: Mähgerät
- 03: Ausleger
- 04: Konsole
- 05: Fahrzeugdrehlager
- 06: Auslegerdrehlager
- 07: Arm
- 08: Arm (teleskopisch)
- 09: Arm (teleskopisch)
- 10: Zylinder-/Kolbeneinrichtung
- 11: Zylinder-/Kolbeneinrichtung
- 12: Zylinder-/Kolbeneinrichtung
- 13: Radachse
- 14: Hindernis
- 15: Schwenklager
- 16: erste vertikale Achse
- 17: zweite vertikale Achse
- 18: Fahrtrichtung
- 19: Vorderrad
- 20: Hinterrad
- 21: Pfeil
- 22: Pfeil
- 23: Pfeil
- 24: erste Schwenkachse
- 25: zweite Schwenkachse
- 26: dritte Schwenkachse

## Patentansprüche

1. Trägerfahrzeug (1) mit einem angebauten Mähgerät (2), welches am freien Ende eines Auslegers (3) angeordnet ist, der auf einer fahrzeugfesten Konsole (4) an einem Fahrzeugdrehlager (5) um eine erste vertikale Achse (16) drehbar gelagert ist,
**dadurch gekennzeichnet,**
**dass** der Ausleger (3) ein Auslegerdrehlager (6) aufweist, an welchem das Mähgerät (2) um eine zweite vertikale Achse (17) drehbar gelagert ist, und
**dass** Mittel zur Steuerung einer Drehung im Fahrzeugdrehlager (5) und einer Drehung im Auslegerdrehlager (6) eingerichtet sind,
wobei das Fahrzeugdrehlager (5) und das Auslegerdrehlager (6) durch die Mittel zur Steuerung zu Drehungen in gleichen Winkelbeträgen, jedoch gegensätzlichen Drehrichtungen ansteuerbar sind.

2. Trägerfahrzeug (1) nach Anspruch 1, **dadurch gekennzeichnet, dass** das Mähgerät (2) eine langgestreckte Form aufweist, wobei die Längserstreckung quer zur Fahrtrichtung (18) des Trägerfahrzeuges, insbesondere eines Traktors (1), orientiert ist.

3. Trägerfahrzeug nach Anspruch 1 oder 2, **dadurch gekennzeichnet, dass** das Fahrzeugdrehlager (5) an einem Ende des Trägerfahrzeuges, insbesondere Traktors (1), insbesondere am Fahrzeugheck, angeordnet ist.

4. Trägerfahrzeug (1) nach einem der Ansprüche 1 bis 3, **dadurch gekennzeichnet, dass** das Mähgerät (2) zwischen zwei Radachsen (13, 13') des Trägerfahrzeuges, insbesondere Traktors (1), eindrehbar ist.

5. Trägerfahrzeug (1) nach einem der Ansprüche 1 bis 4, **dadurch gekennzeichnet, dass** der Ausleger (3) dreiteilig, mit einem fahrzeugseitigen ersten Arm (7), einem hieran angeschlossenen zweiten Arm (8) und einem arbeitsgerätseitigen dritten Arm (9) ausgebildet ist.

6. Trägerfahrzeug (1) nach Anspruch 5, **dadurch gekennzeichnet, dass** der erste Arm (7) gegenüber dem Fahrzeugdrehlager (5) um eine erste horizontale Schwenkachse (24) verschwenkbar ist und/oder dass der zweite Arm (8) gegenüber dem ersten Arm (7) um eine zweite horizontale Schwenkachse (25) verschwenkbar ist, und/oder dass der dritte Arm (9) gegenüber dem zweiten Arm (8) um eine dritte horizontale Schwenkachse (26) verschwenkbar ist.

7. Trägerfahrzeug (1) nach Anspruch 5 oder 6, **dadurch gekennzeichnet, dass** der zweite Arm (8) und der dritte Arm (9) in Richtung ihrer Längserstreckung (Pfeile 21 bzw. 22) aus- und einfahrbar ausgebildet ist.

8. Trägerfahrzeug nach einem oder mehreren der Anprüche 1 bis 7, **dadurch gekennzeichnet, dass** die Mittel zur Steuerung einer Drehung im Fahrzeugdrehlager (5) und einer Drehung im Auslegerdrehlager (6) derart automatisch und synchron zusammenwirken, dass beim vom Fahrer des Traktors (1) bewirkten Ausschwenken des Auslegers (3) automatisch auch das Mähgerät (2) in entgegengesetzter Drehrichtung verschwenkt wird, so dass das Mähgerät (2) immer senkrecht zur Fahrtrichtung (18) steht, ohne dass das Mähgerät (2) separat gesteuert werden muss.

9. Trägerfahrzeug nach eienm oder mehreren der Ansprüche 1 bis 8, **dadurch gekennzeichnet, dass** das Fahrzeugdrehlager (5) für den Ausleger (3) am Heck des Traktors (1) angeordnet ist und dass das Mähgerät (2) mittels des Auslegers (3) zwischen die Vorder- und Hinterräder (19 bzw. 20) des Traktors (1) einschwenkbar ist.
